# EUROPEAN PATENT SPECIFICATION

(11) **EP 0 420 829 B1**
(45) Date of publication and mention of the grant of the patent: **01.12.1993**
(21) Application number: 90850294.1
(22) Date of filing: 03.09.1990
(51) Int. Cl.: G05G 1/00, B60K 31/00

(54) **Length adjustment device**
Längenverstellvorrichtung
Dispositif de réglage de longueur

(30) Priority: 28.09.1989 SE 8903187
(43) Date of publication of application: 03.04.1991
(73) Proprietor: AB VOLVO, 405 08 Göteborg (SE)
(72) Inventor: Martinsson, Ingemar, S-42257 Hisings Backa (SE); Karlsson, Jan, S-421 66 Västra Frölunda (SE)
(74) Representative: Mossmark, Anders

(56) References cited:
- EP-A- 0 139 082
- DE-C- 1 076 523
- US-A- 2 167 910
- US-A- 4 852 425

## Description

The invention relates to a length adjustment device, which makes it possible to adjust a predetermined maximum, preferably playless, distance between two points A and B or adjustment of a predetermined minimum distance between two points A and B. The device is preferably used together with links for vehicles, and especially at such locations where it would be difficult to inspect an installation by sight.

On the market today there is a large number of different length adjustment devices. Many of these length adjustment devices are provided with a threaded element by means of which it is possible to adjust different lengths between two points A and B.

A known such device (see for example EP-A-0 139 082) provides a length adjustment device for adjustment of a predetermined maximum or minimum, preferably playless, distance between two points A and B, which points are moveable in relation to each other, which length adjustment device comprises two substantially stiff and long elements joined by means of a pivot, attachment devices for pivotal attachment of the length adjustment device between said points A and B, an adjustment screw and co-operating threads which are arranged at the first of said two substantially long elements, an interacting surface, arranged at the second substantially long element, said interacting surface co-operating with one of the end surfaces of the adjustment screw for adjustment of said predetermined distance between A and B.

Such an element can either be used in order to adjust a maximum distance or a minimum distance. If the locating means of the threads for the adjustment screw is arranged opposite the pivot of the device, it can be used for adjusting a maximum distance between A and B, whereas if the locating means of the threads is arranged between the pivot and the attachment point, it can be used for adjusting a minimum distance between A and B.

Accordingly, the device provides a stop in one direction between the points A and B between which it is attached, but allows movement between A and B in the other direction. The location of the locating means for the threads and, accordingly, the interacting surface determines if the device is provided for adjustment of a minimum or a maximum distance.

Very often it is of major importance that this minimum or maximum distance which is to be adjusted does not go beyond or below said predetermined value. Accordingly, it is important that the adjustment screw during adjustment is only rotated to this exact predetermined position. Further rotation of this adjustment screw, which moves the screw and thereby effects the adjustment device, could for example cause damage to either the adjustment device itself or any of the parts it is attached to. Therefore it is of utmost importance that the adjustment is done in a very precise manner. Previously this has been possible with known adjustment devices if it has been possible during the adjustment phase to have had good possibilities to inspect the adjustment by sight. Moreover, this adjustment process per se implies a rather time-consuming procedure, which is undesirable.

It is an object of the invention to achieve an adjustment device which eliminates the above mentioned disadvantages and which makes it possible to adjust a predetermined maximum or minimum, preferably playless, distance between two points A and B, in a rational manner which does not require a visual check.

This object is attained by means of the device according to claim 1.

In the following, the invention will be described in more detail by means of a preferred embodiment with reference to the annexed figures, in which:
- Figure 1:: is a side view of a preferred embodiment of the invention,
- Figure 2:: shows the first substantially long element in a view from above,
- Figure 3:: shows the second longish element seen from above,
- Figure 4:: shows the adjustment screw of the adjustment device, and
- Figure 5:: shows a possible application of an adjustment device in accordance with the invention.

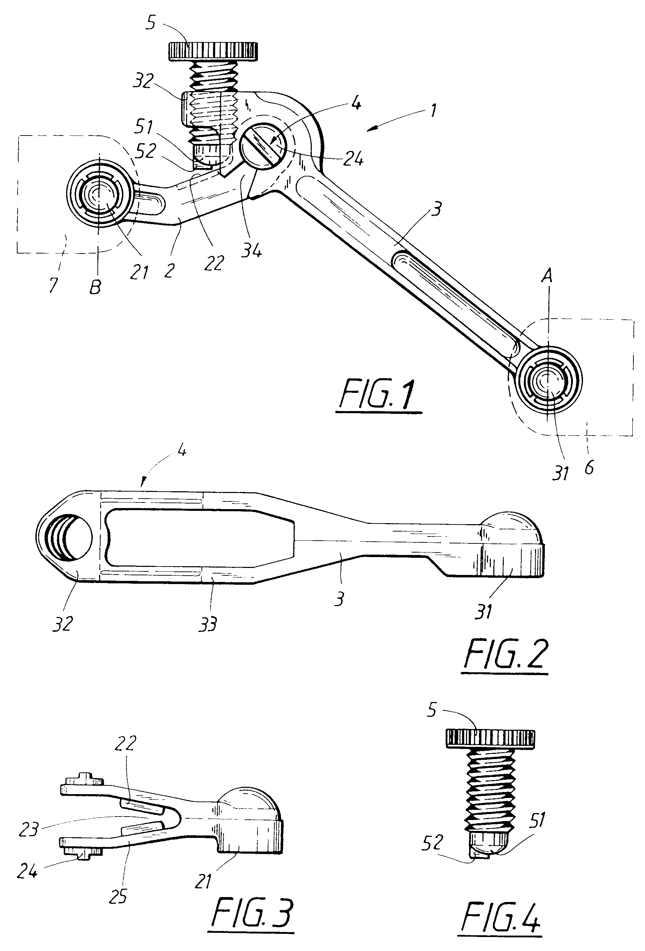

In Figure 1 there is shown a length adjustment device for adjustment of a predetermined maximum distance between two points A and B. The device 1 comprises two substantially long elements 2,3 which are joined by pivoting means 24 housed in a socket 4 . The device 1 is, via its attachment points 21,31, fitted between two schematically shown means 6,7 between which said maximum predetermined distance is to be adjusted.

Furthermore, the device is arranged with an adjustment screw 5 of which one end surface 51 is intended to interact with interacting surface 22 arranged on one of said substantially long elements 2. A blade-like protruding device 52 which protrudes in the longitudinal direction of the screw and which transversely extends about half the diameter of the screw is arranged at the end surface 51. For interaction with said protruding device 52, the interacting surface 22 is arranged with a slot 23 which is v-shaped, converging towards the attachment point 21 (see Figure 3).

The locating means for the threads 32 of the screw 5 is arranged on a first substantially long element 3 on the opposite side of the socket 4 in relation to the attachment point 31. An adjustment device of this kind makes it possible to adjust a predetermined maximum distance between two points A and B, in accordance with the following.

Before fitting the adjustment device 1 it is made certain that the screw 5 is in a position so that its end surface 51 does not protrude a substantial distance out of the locating means for the threads 32. Thereafter it should be checked that the means 6,7, between which the predetermined maximum distance between the points A and B is to be adjusted, are positioned so that the internal distance corresponds to said predetermined maximum distance. At this stage the adjustment device 1 can be fitted via its attachment points 21,31 to the means 6,7 respectively. A preferred way of attaching the adjustment device is by means of ball-shaped pivot points at said means 6,7, which interact with snap-fit attachment devices 21,31 of the adjustment device 1. After having fitted the adjustment device 1, (preferably by snap-fit), it is possible to adjust the maximum-allowed distance between the means 6,7 by rotation of the screw 5. When the end surface 51 of the screw 5 is almost in contact with the interacting surface 22 and further rotation of the screw is effected, it will occur that the blade-shaped protruding device 52 extends into the slot 23. Further rotation of the screw 5 is obstructed since the blade-shaped protruding device 52 interacts therein with one of the side surfaces of the slot 23. Accordingly, the predetermined maximum distance between the points A and B of the means 6,7 has been adjusted.

Hence it is possible by means of the device in accordance with the invention to achieve the above in a very rapid and rational manner, and without the need for visual checking. The person or robot who is fitting the device does not only get confirmation by an increasing rotational resistance when the protruding device 52 interacts with the slot 23 but also audible confirmation when snapping into the slot 23, which prevents possible damage.

Moreover, Figure 1 shows that the first substantial longi element 3 has openings 34, which facilitates the fitting of the interacting pivoting means.

Figure 2 shows one embodiment of the substantial longi element 3 seen from above. Since the element 3 is positioned in the plane of the paper, it is evident that the centre-line of the threads of the thread locating means 32, extends obliquely in relation to the extension of the element 3. In this preferred mode the angle is about 45°, though may lie between 10° and 80°, preferably between 40° and 60°. Furthermore, it is shown that the socket 4 is made of two parallel sides having recesses (see Figure 2) for the inter-acting part. The attachment device 31 consists of a spherically formed portion with a certain resiliency, so that the snap-fit action can be obtained when it is fitted onto a ball-joint.

In Figure 3 the second substantially long element is shown in a view from above. Two leg-like parts 25 extend from the attachment device 21. At a first diverging portion of these leg-like parts 25 there is arranged an interacting means 22. This means consists of two blade-like devices attached on the inside of each leg 25, at said diverging portion, so that a slot 23 is formed which converges towards the attachment device 21. At the ends of each leg the pivoting points of the device are arranged. Each pivoting device 24 consists of two parts. One inner part having a circular peripheral surface and an outer part which extends diametrically across the inner part. This special design of the interacting parts of the pivot makes it possible compressing the legs of the second substantially long element 2, and directing the outer part of the pivoting device 24 so that it corresponds to the direction of the opening 34, the elements 2,3 can be easily co-joined. Despite this simple way of co-joining the device, very secure fitting is achieved between the two elements, since the outer part of the pivoting device 24 in its active position is arranged substantially transversely in relation to the opening 34.

In Figure 4 the adjustment screw 5 of the invention is clearly shown. The screw 5 consists of the actuatable part from which a threaded portion extends, and an inner end surface 51 which is spherical and on which there is arranged a blade-like device 52. This blade-like device 52 protrudes in the longitudinal direction of the screw and has a transverse extension corresponding to half the diameter. Thanks to the spherical form of the end surface 51, the device can be used with the desired effect at a great many different angles between the two elements 2,3.

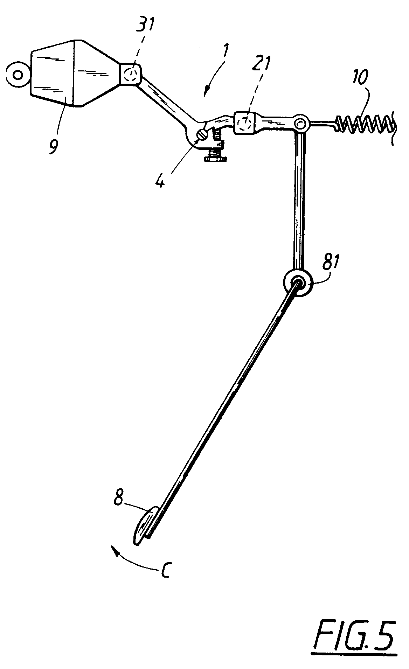

In Figure 5 there is shown a preferred principal application of the device 1. The device is fitted to a constant speed-control device of a vehicle. A pedal for a throttle device, which is pivotally arranged about an axis 81, is affected by a force in a direction indicated by the arrow C, by means of a helical tension spring 10 which is arranged at the opposite side of the pivot 81. Adjacent the spring 10, one of the attachment points 21 of the adjusting device is fitted. The other attachment points 31 of the device is fitted to a vacuum-activated controlling device 9, which forms part of the cruise control.

The cruise control works in such a manner that if it is desired to retain a certain speed, this is indicated by activating a certain means (not shown). This, in turn, causes a signal to be transmitted which signal affects the vacuum-activated device 9, which is then evacuated so that it is compressed to a certain extent where it detects that the desired pedal-position is obtained (not further described). Accordingly, the vacuum-activated element 9 is locked at a certain position and it then has also moved the adjusting device 1 a corresponding distance, so that playless attachment is achieved between the spring 10 and the vacuum-activated element 9. The driver can now remove his foot from the pedal 8 and the speed will be maintained thanks to the constant positioning of the vacuum-activated element 9 and further means co-acting therewith (not shown). If, however, the driver wishes to leave this steady state, this can be done by depressing the pedal 8. A sensor (not shown) detects this activation, which in turn effects the deactivation of the vacuum-activated element 9. When the pedal is depressed the distance between the attachment points 21,31 of the adjustment device will be reduced. This reduction of the distance is allowed, since adjustment device 1 has an intermediate pivot.

The invention is not limited of what has been described above, but can be varied within the scope defined in the following claims. Accordingly, it is also possible to use the above-described principle to achieve a simple adjustment of a certain minimum distance. The locating means for threads 32, however, should then be located between the attachment point 31 and the pivot. The interacting surface 22 will, in this modified application, be located on the opposite side, i.e on that side where an acute angle is created between the two substantially long elements 2,3. For the skilled man it is evident that the design/arrangement of the two interacting parts 23,52 may be modified, e.g a protruding pin which may interact with a slot or a hole.

## Claims

1. Length adjustment device for adjustment of a predetermined maximum or minimum, preferably playless, distance between two points (A) and (B), which points are moveable in relation to each other, which length adjustment device comprises two substantially stiff and long elements (2,3) joined by means of a pivot (4,24) housed in a socket (4), attachment devices (21,31) for pivotal attachment of the length adjustment device between said points (A) and (B), an adjustment screw (5) and co-operating threads (32) which are arranged on the first (3) of said two substantially long elements, an interacting surface (22), arranged on the second substantially long element (2), said interacting surface (22) co-operating with one of the end surfaces (51) of the adjustment screw (5) for adjustment of said predetermined distance between (A) and (B), **characterized** in that said one end surface (51) is provided with a protruding means (52) and that said interacting surface (22) is provided with a recess (23) for interactive co-operation with said protruding means (52), thereby impeding further rotation of said screw (5).

2. Length adjustment device according to claim 1, **characterized** in that the device is adapted for adjustment of a predetermined maximum playless distance between two points (A) and (B) and that the first substantially long element (3) has a locating means for the threads (32) which is arranged on the opposite side of the socket (4) in relation to the attachment device (31) on said first substantially long element (3).

3. Length adjustment device according to claim 2, **characterized** in that the locating means for the threads (32) is arranged in direct connection to the socket (4).

4. Length adjustment device according to claim 3, **characterized** in that the center line of the thread locating means (32) is substantially within that plane within which the two substantially long elements (2,3) are swingable.

5. Length adjustment device according to claim 4, **characterized** in that the center line of the thread locating means forms an acute angle in relation to the line between the attachment device (31) on the first substantially long element (3) and the socket (4) and has a value between 10-80°, preferably between 40-60°.

6. Length adjustment device according to claim 1, **characterized** in that the end surface (51) of the screw (5) is spherically formed.

7. Length adjustment device according to claim 6, **characterized** in that the protruding means (52) which protrudes in the longitudinal direction of the screw (5) is formed by a blade-like element.

8. Length adjustment device according to claim 7, **characterized** in that the length of the blade-like element (52) essentially corresponds to the radius of the screw.

9. Length adjustment device according to claim 1, **characterized** in that said recess (23) is formed by a slot which is arranged in the second substantially long element (2).

10. Length adjustment device according to claim 9, **characterized** in that said slot has converging sides, converging towards the attachment device (21) of the second substantially long element.

## Patentansprüche

1. Längeneinstellvorrichtung zur Einstellung eines vorbestimmten maximalen oder minimalen, vorzugsweise spielfreien, Abstands zwischen zwei Punkten (A) und (B), wobei die Punkte in Relation zueinander beweglich sind, wobei die Längeneinstellvorrichtung besteht aus: zwei im wesentlichen steifen und langen Elementen (2, 3), die mittels eines Drehgelenks (4, 24) verbunden sind, das in einer Buchse (4) eingefügt ist, Halterungsvorrichtungen (21, 31) für eine gelenkige Halterung der Längeneinstellvorrichtung zwischen den Punkten (A) und (B), einer Einstellschraube (5) und damit zusammenwirkenden Gewinden (32), die an dem ersten (3) der zwei im wesentlichen langen Elemente angeordnet sind, einer Wechselwirkungsoberfläche (22), die an dem zweiten im wesentlichen langen Element (2) angeordnet ist, wobei die Wechselwirkungsoberfläche (22) mit einer der Endoberflächen (51) der Einstellschraube (5) zur Einstellung des vorbestimmten Abstands zwischen (A) und (B) zusammenwirkt,
**dadurch gekennzeichnet**,
daß die Endoberfläche (51) mit einer vorstehenden Einrichtung (52) versehen ist, und daß die Wechselwirkungsoberfläche (22) zur interaktiven Zusammenwirkung mit der vorstehenden Einrichtung (52) mit einer Aussparung (23) versehen ist, wodurch eine weitere Drehung der Schraube (5) behindert wird.

2. Längeneinstellvorrichtung nach Anspruch 1, dadurch gekennzeichnet, daß die Vorrichtung zur Einstellung eines vorbestimmten maximalen spielfreien Abstands zwischen zwei Punkten (A) und (B) geeignet ist, und daß das erste im wesentlichen lange Element (3) eine Aufnahmeeinrichtung für die Gewinde (32) besitzt, die in bezug zu der Halterungsvorrichtung (31) an dem ersten im wesentlichen langen Element (3) an der gegenüberliegenden Seite der Buchse (4) angeordnet ist.

3. Längeneinstellvorrichtung nach Anspruch 2, dadurch gekennzeichnet, daß die Aufnahmeeinrichtung für die Gewinde (32) in direkter Verbindung mit der Buchse (4) angeordnet ist.

4. Längeneinstellvorrichtung nach Anspruch 3, dadurch gekennzeichnet, daß die Zentrallinie der Gewinde-Aufnahmeeinrichtung (32) im wesentlichen in jener Ebene liegt, in der die zwei im wesentlichen langen Elemente (2, 3) schwenkbar sind.

5. Längeneinstellvorrichtung nach Anspruch 4, dadurch gekennzeichnet, daß die Zentrallinie der Gewinde-Aufnahmeeinrichtung in bezug auf die Linie zwischen der Halterungsvorrichtung (31) an dem ersten im wesentlichen langen Element (3) und der Buchse (4) einen spitzen Winkel bildet und einen Wert zwischen 10-80°, vorzugsweise zwischen 40-60° besitzt.

6. Längeneinstellvorrichtung nach Anspruch 1, dadurch gekennzeichnet, daß die Endoberfläche (51) der Schraube (5) sphärisch ausgebildet ist.

7. Längeneinstellvorrichtung nach Anspruch 6, dadurch gekennzeichnet, daß die vorstehende Einrichtung (52), die in der Längsrichtung der Schraube (5) vorsteht, durch ein klingen- bzw. blendenähnliches Element ausgebildet ist.

8. Längeneinstellvorrichtung nach Anspruch 7, dadurch gekennzeichnet, daß die Länge des blendenähnlichen Elements (52) im wesentlichen dem Radius der Schraube entspricht.

9. Längeneinstellvorrichtung nach Anspruch 1, dadurch gekennzeichnet, daß die Aussparung (23) durch einen Schlitz gebildet ist, der in dem zweiten im wesentlichen langen Element (2) angeordnet ist.

10. Längeneinstellvorrichtung nach Anspruch 9, dadurch gekennzeichnet, daß der Schlitz konvergierende Seiten besitzt, die zu der Halterungsvorrichtung (21) des zweiten im wesentlichen langen Elements konvergieren.

## Revendications

1. Dispositif d'ajustement de longueur, destiné à ajuster une distance maximale ou minimale prédéterminée, de préférence sans jeu, entre deux points (A) et (B), ces points étant mobiles l'un par rapport à l'autre, le dispositif d'ajustement de longueur comprenant deux éléments sensiblement longs et rigides (2, 3) raccordés par un pivot (4, 24) logé dans une douille (4), des dispositifs (21, 31) de fixation pivotante du dispositif d'ajustement de longueur entre lesdits points (A) et (B), une vis (5) d'ajustement et un taraudage coopérant (32) qui sont placés dans le premier (3) des deux éléments sensiblement longs, une surface (22) de coopération placée sur le second élément sensiblement long (2), la surface de coopération (22) étant destinée à être au contact de l'une des surfaces d'extrémité (51) de la vis (5) pour l'ajustement de la distance prédéterminée entre les points (A) et (B), caractérisé en ce que ladite surface d'extrémité (51) porte un dispositif en saillie (52), et la surface de coopération (22) a une cavité (23) destinée à coopérer avec le dispositif en saillie (52) et à empêcher ainsi une rotation supplémentaire de la vis (5).

2. Dispositif d'ajustement de longueur selon la revendication 1, caractérisé en ce que le dispositif est destiné à l'ajustement d'une distance maximale prédéterminée sans jeu entre deux points (A) et (B), et en ce que le premier élément sensiblement long (3) possède un dispositif de positionnement du taraudage (32) placé du côté de la douille (4) opposé à celui du dispositif de fixation (31) du premier élément sensiblement long (3).

3. Dispositif d'ajustement de longueur selon la revendication 2, caractérisé en ce que le dispositif de positionnement du taraudage (32) est destiné à être raccordé directement à la douille (4).

4. Dispositif d'ajustement de longueur selon la revendication 3, caractérisé en ce que l'axe central du dispositif (32) de positionnement du taraudage est pratiquement placé dans le plan dans lequel peuvent pivoter les deux éléments sensiblement longs (2, 3).

5. Dispositif d'ajustement de longueur selon la revendication 4, caractérisé en ce que l'axe central du dispositif de positionnement de taraudage fait un angle aigu avec la droite passant par le dispositif de fixation (31) du premier élément sensiblement long (3) et la douille (4), et cet angle a une valeur comprise entre 10 et 80° et de préférence entre 40 et 60°.

6. Dispositif d'ajustement de longueur selon la revendication 1, caractérisé en ce que la surface d'extrémité (51) de la vis (5) a une forme sphérique.

7. Dispositif d'ajustement de longueur selon la revendication 6, caractérisé en ce que le dispositif (52) en saillie qui dépasse dans la direction longitudinale de la vis (5) est formé par un élément en forme de lame.

8. Dispositif d'ajustement de longueur selon la revendication 7, caractérisé en ce que la longueur de l'élément (52) en forme de lame correspond pratiquement au rayon de la vis.

9. Dispositif d'ajustement de longueur selon la revendication 1, caractérisé en ce que la cavité (23) est formée par une fente disposée dans le second élément sensiblement long (2).

10. Dispositif d'ajustement de longueur selon la revendication 9, caractérisé en ce que la fente a des côtés convergeant vers le dispositif (21) de fixation du second élément sensiblement long.
